# EUROPÄISCHE PATENTANMELDUNG

(11) **EP 1 147 875 A2**
(43) Veröffentlichungstag der Anmeldung: **24.10.2001**
(21) Anmeldenummer: 01107610.6
(22) Anmeldetag: 27.03.2001
(51) Int. Cl.: B29C 51/16, B29C 63/22, B44C 1/24, B29C 51/12, B29C 59/02, B44C 5/04, B44C 1/18

(54) **Verfahren zur partiellen Oberflächenprofilierung von mit einem Dekormaterial zu kaschierenden Trägerteilen**

(30) Priorität: 19.04.2000 DE 10019496
(71) Anmelder: PAUL KIEFEL GMBH, D-83395 Freilassing (DE)
(72) Erfinder: Lochner, Hans, 83471 Berchtesgaden (DE)
(74) Vertreter: Zmyj, Erwin, Dipl.-Ing., Dipl.-Wirtsch.-Ing.

(57) **Zusammenfassung**

Zur Erzielung einer partiellen Oberflächenprofilierung von mit einem Dekormaterial (4,5) zu kaschierenden Trägerteilen (1) wird zuerst das Trägerteil (1) mit einem der späteren Oberflächenprofilierung entsprechenden Profil (2) bleibend versehen, das Dekormaterial (4,5) auf das Trägerteil durch ein bekanntes Kaschierverfahren aufgebracht und dann wird das Dekormaterial mittels eines dem Profil angepassten Oberwerkzeug (8) geprägt.

## Beschreibung

Die Erfindung bezieht sich auf ein Verfahren zur partiellen Oberflächenprofilierung von mit einem Dekormaterial zu kaschierenden Trägerteilen. Die Erfindung bezieht sich auf eine Vorrichtung zur Durchführung des Verfahrens.

Die partielle Oberflächenprofilierung von mit einem Dekormaterial zu kaschierenden Trägerteilen erfolgt in bekannter Weise dadurch, dass mittels eines Ober- und Unterwerkzeuges die gewünschte Profilierung eingebracht und das geprägte Dekormaterial je nach Zusammensetzung an der Rückseite durch Klebstoff stabilisiert Daraufhin wird dann das so behandelte Dekormaterial auf ein Trägerteil aufgebracht oder ggf. hinterschäumt. Bei diesem Aufbringen bzw. Kaschieren auf das Trägerteil werden jedoch häufig die dreidimensionalen Konturen der hergestellten Oberflächenprofilierung beeinträchtigt, so dass bei dem fertig hergestellten Bauteil dann keine scharfkantige Oberflächenprofilierung vorliegt. Dies gilt nicht nur für Leder und Textilien, sondern auch für Kunststofffolien.

Aufgabe der Erfindung ist es, ein Verfahren und eine Vorrichtung bereitzustellen, mit deren Hilfe scharfkantige Oberflächenprofilierungen bei aufzukaschierenden Dekormaterialien bleibend hergestellt werden können.

Diese Aufgabe wird bei einem Verfahren der eingangs erläuterten Art erfindungsgemäß dadurch gelöst, dass zuerst das Trägerteil mit einem der späteren Oberflächenprofilierung entsprechenden Profil bleibend versehen wird, dass das Dekormaterial auf das Trägerteil aufgebracht wird und dass dann das Dekormaterial mittels eines dem Profil angepassten Oberwerkzeug geprägt wird. Die Oberflächenprofilierung kann hierbei sowohl positiv als auch negativ sein.

Der Grundgedanke der Erfindung besteht darin, unter dem Dekormaterial, welches mit einer Oberflächenprofilierung zu versehen ist, einen sogenannten *"verlorenen Kern"* als Ersatz für ein Unterwerkzeug auf dem Trägerteil in dem zu profilierenden Bereich aufzubringen. Da als Ersatz für ein Unterwerkzeug eine entsprechende Profilierung am Trägerteil vorgesehen ist, wobei dieses Ersatzunterwerkzeug beim Prägevorgang das bisher übliche Unterwerkzeug ersetzt und nach dem Prägen in dem geprägten Bereich an der Rückseite des Dekormaterials verbleibt, können keine Veränderungen des so erzeugten, profilierten Oberflächenbereiches eintreten, auch wenn Trägerteile dieser Art nachträglich hinterschäumt oder auf anderen Teilen aufgebracht werden, wobei häufig mit einer Druckanwendung und auch einer Temperatureinwirkung gerechnet werden muß.

Das der Oberflächenprofilierung entsprechende Profil kann bei der Herstellung des Trägerteiles ausgebildet werden. Es ist aber auch möglich, dass das der Oberflächenprofilierung entsprechende Profil als ein vom Trägerteil getrenntes Teil herzustellen und mit dem Trägerteil zu verbinden. Entscheidend ist immer die Tatsache, dass bei der prägenden Oberflächenprofilierung mittels eines Oberwerkzeuges dieses Profil als verlorener Kern unter dem Dekormaterial verbleibt.

Die Erfindung ermöglicht also eine Profilierung, wie sie bisher mit den üblichen Unter- und Oberwerkzeugen erzeugt wurde, ohne dass dieses scharfkantige Profil in irgendeiner Weise durch nachträgliche Behandlungen hinsichtlich seiner Prägnanz negativ beeinflussbar ist, weil das als Ersatz für das Unterwerkzeug vorgesehene Profil stets an der Hinterseite des Dekormaterials verbleibt und somit die Exaktheit des erzeugten Profiles garantiert.

Die angestrebte Profilierungsprägnanz kann dadurch verbessert werden, dass in Weiterbildung der Erfindung das Dekormaterial unmittelbar vor dem Prägevorgang erwärmt wird. Diese Erwärmung hängt in erster Linie davon ab, aus welchem Material das Dekormaterial besteht und wird beispielsweise bei thermoplastischen Kunststoffen höher liegen als beim Prägen von Leder.

Als prägefähige Materialien können Polyolefine, technische und biologisch abbaubare Kunststoffe sowie deren E-Modifikationen und organische Stoffe sowie Leder oder Kunstleder betrachtet werden. Sie können vollständig oder anteilig aus thermoplastischen Komponenten bestehen sowie Fasern und Füllstoffe mit einem Anteil bis 99% beinhalten. Fasern und Füllstoffe können organisch und/oder anorganisch und/oder synthetisch und/oder natürlich sein. Ebenso sind duroplastische Verbunde mit thermoplastischem Anteil prägefähig. Diese Materialien können als Folien, Vliese, Teppiche, Textilien oder in anderer Halbzeuggestalt , wie z.B. Platten, Spritzgußteile, usw., vorliegen sowie aus Verbunden der genannten Materialien mit Schäumen aus thermoplastischen Kunststoffen oder Schäumen mit thermoplastischem und/oder duroplastischem Kunststoffanteil bestehen.

Die Erwärmung des zu profilierenden Bereiches kann durch IR-Strahler durch ein erhitztes gasförmiges Medium, durch Kontaktwärme oder im Hochfrequenzfeld erfolgen.

Damit Spannungen zwischen dem erhitzten Bereich, welcher der Oberflächenprofilierung unterworfen wird und den angrenzenden Randbereichen vermieden werden, ist es zweckmäßig bei der Erwärmung des zu profilierenden Bereiches in dem Randbereich desselben eine Übergangszone mit allmählich abfallender Temperatur einzustellen. Hierdurch wird nicht nur ein Spannungsfeld abgebaut, sondern auch eine Wulstprägung um den geprägten Bereich herum vermieden. Bei der Anwendung von IR-Strahlern, aber auch bei Erwärmen mittels erhitzter, gasförmiger Medien, ist es besonders vorteilhaft, wenn zur Steuerung der örtlichen Verteilung der Wärmeeinwirkung auf das zu prägende Material eine Blende verwendet wird. Diese Blende kann im Randbereich durch geeignete Maßnahmen für die IR-Strahlung durchlässig gemacht werden, um die Übergangszone mit allmählich abfallender Temperatur einstellen zu können.

Bei vielen Dekormaterialien ist es vorteilhaft, wenn das erwärmte Dekormaterial beim Prägevorgang einer schroffen Abkühlung unterworfen wird. Die Profilierung bzw. Prägung kann hierbei in vorteilhafter Weise mittels eines kühlbaren Prägewerkzeuges erfolgen. Üblicherweise genügt es, wenn die Prägung oder Profilierung mittels eines massiven Werkzeuges erfolgt. Wenn dagegen eine noch stärkere Ausprägung von scharfkantigen Konturen gewünscht ist und wenn bei geringen Drücken eine materialschonende Verarbeitung erforderlich ist und trotzdem eine scharfe Ausformung der Profilierung erzielt werden soll, so ist dies erreichbar, wenn in Weiterbildung der Erfindung die Profilierung bzw. Prägung mittels eines luftdurchlässigen Oberwerkzeuges erfolgt. Die vorteilhafte Wirkung wird dadurch erzielt, dass die zwischen dem zu profilierenden Material und dem Oberwerkzeug eingeschlossene Luft durch das Oberwerkzeug hindurch entweichen kann. Um hier eine möglichst scharfkantige Profilierung zu erzielen, ist es vorteilhaft, wenn das Oberwerkzeug eine mikroporöse Struktur aufweist, so dass praktisch an allen Stellen des Oberwerkzeuges eine Abführung der eingeschlossenen Luft möglich ist, was dazu führt, dass sich das zu profilierende Material ohne Zwischenlage eines komprimierten Luftpolsters unmittelbar an das Oberwerkzeug anlegen und dessen Kontur annehmen kann. Der Effekt der Abführung der eingeschlossenen Luft kann in Weiterbildung der Erfindung noch dadurch gesteigert werden, dass durch Anwendung eines Unterdruckes am Oberwerkzeug das zu profilierende Material an das Oberwerkzeug angesaugt wird. Es ist aber auch möglich, durch Anwendung eines Überdruckes das zu profilierende Material gegen das auf dem Trägerteil verbleibende Profil zu drücken.

Um die angestrebte, optisch einwandfreie Ausbildung der erwünschten Oberflächenprofilierung zu erzielen, ist es vorteilhaft, wenn in Weiterbildung der Erfindung zwischen der zu prägenden bzw. zu profilierenden Oberfläche und dem Oberwerkzeug ein Trennmittel eingesetzt wird. Dies ist insbesondere bei thermoplastischen Kunststoffen vorteilhaft, da die bei der Berührung mit dem gekühlten Oberwerkzeug erstarrende Kunststoffschicht nicht anhaftet.

Um eine Anpassung an die jeweiligen Verhältnisse, insbesondere an die verwendeten Materialien, zu erzielen, kann in vorteilhafter Weiterbildung der Erfindung von den den Profilierungsvorgang beeinflussenden Faktoren mindestens einer veränderbar sein. Die den Profilierungsvorgang beeinflussenden Parameter sind der Anpressdruck, die Heiztemperatur, die Heizzeit sowie die Profilierungszeit bzw. Profilierungsgeschwindigkeit, die, da materialabhängig, durch einen Versuch ermittelt werden können.

Je nach den verwendeten Materialien für das Trägerteil, das einzusetzende, verlorene Unterwerkzeug und das Dekormaterial, kann es vorteilhaft sein, wenn in weiterer Ausgestaltung der Erfindung zumindest der mit dem Profil versehene Bereich des Trägerteiles vor dem Aufbringen des Dekormaterials mit einem Klebstoff versehen wird. Hierdurch wird eine dauerhafte Verbindung zwischen Dekormaterial und dem auf dem Trägerteil verbleibenden Profil bzw. dem verlorenen Unterwerkzeug herbeigeführt.

Diese Verbindung kann in Abhängigkeit von den verwendeten Materialien auch dadurch erzielt werden, dass der zu profilierende Bereich mit dem verbleibenden Profil durch Verschweißen im Hochfrequenzfeld verbunden wird. Es ist auch möglich, den zu profilierenden Bereich mit dem verbleibenden Profil durch mechanisches Verankern im Schmelzbad oder durch eine zwischenliegende, niedrigschmelzende Siegelschicht zu verbinden, wobei diese Siegelschicht entsprechend ihrer niedrigschmelzenden Eigenschaft etwas erwärmt werden muß.

Eine Vorrichtung zur Durchführung des Verfahrens ist dadurch gekennzeichnet, dass das Oberwerkzeug sowohl zum Erwärmen als auch zum Kühlen des zu profilierenden Materials eingerichtet ist. Eine bevorzugte Ausgestaltung dieser Vorrichtung ist dadurch gekennzeichnet, dass das Oberwerkzeug als loses Teil mit guten Wärmeleiteigenschaften und mit einer für den Profilierungsvorgang ausreichenden Wärmespeicherkapazität ausgebildet ist und durch unmittelbaren Kontakt mit einer Heizeinrichtung oder einer Kühleinrichtung erwärmbar oder kühlbar ist. Für die Durchführung des Verfahrens kann es vorteilhaft sein, das Oberwerkzeug zunächst zu erwärmen, so dass es nicht nur als Oberwerkzeug zur Profilierung, sondern auch als Speicherheizung dient, um die gegebenenfalls bei der Profilierung notwendige Erwärmung des zu profilierenden Materials herbeizuführen. Während des Ausübens eines zur Verformung notwendigen Druckes wird zwischen der Pressensohle und dem Oberwerkzeug eine Kühlplatte eingelegt, so dass durch diese Kühlplatte das Oberwerkzeug gekühlt wird, um durch entsprechende Wärmeübertragung auf das zu profilierende Material dieses Material nach Beendigung des eigentlichen Profilierungsvorganges abzukühlen und damit die Profilierung zu stabilisieren. Es ist dabei vorteilhaft, wenn das Oberwerkzeug sowohl mit einer Heizeinrichtung als auch mit einer Kühleinrichtung ausgerüstet ist, so dass beide Funktionen unmittelbar hintereinander ausgeübt werden können.

Als Heizeinrichtung kann entweder ein Infrarotstrahler oder ein Heißluftgebläse dienen. Es ist aber auch möglich eine Heizeinrichtung vorzusehen, die als Kontaktheizung oder Hochfrequenzheizeinrichtung ausgebildet ist. Diese Heizeinrichtung benötigt keine Blende zur Abdeckung des Bereiches, der an den zu profilierenden Bereich angrenzt. Im Falle der Anwendung eines IR-Strahlers oder eines Heißluftgebläses umfasst die Vorrichtung eine Blende, die die Wärmeeinwirkung auf den zu profilierenden Bereich begrenzt.

In vorteilhafter Weise besteht das Oberwerkzeug aus einem mikroporösen Material, beispielsweise aus mikroporösen Galvanos, Sinterkörpern oder Sinterbronze. Die Verwendung eines Oberwerkzeuges aus einem mikroporösen Werkstoff hat den Vorteil, dass die zwischen dem Oberwerkzeug und dem zu profilierenden Material eingeschlossene Luft entweichen kann. Dieser Vorgang kann auch dadurch unterstützt werden, dass das Oberwerkzeug mit einer Unterdruckquelle in Verbindung steht, die einen Unterdruck an der Berührungsfläche zwischen dem Oberwerkzeug und dem zu profilierenden Material erzeugt. Hierdurch können Lufteinschlüsse abgesaugt werden und außerdem wird ein äußerst exaktes Anlegen des profilierenden Materials an das Oberwerkzeug sichergestellt. Eine entsprechende Wirkung kann auch dadurch erzielt werden, dass das Oberwerkzeug mit einer Druckquelle in Verbindung steht, die einen Überdruck an der Berührungsfläche zwischen dem Oberwerkzeug und dem zu profilierenden Material erzeugt.

Die Erfindung wird nachfolgend anhand eines schematisch dargestellten Ausführungsbeispieles näher erläutert. In der Zeichnung zeigen:
- **Figur 1:**: ein Trägerteil mit einem Profil als *"verlorener Kern*";
- **Figur 2:**: das Trägerteil nach Figur 1 mit aufkaschier- tem Dekor in einer Bearbeitungsstufe; und
- **Figur 3:**: das Trägerteil mit Profil und Dekormaterial sowie Oberwerkzeug.

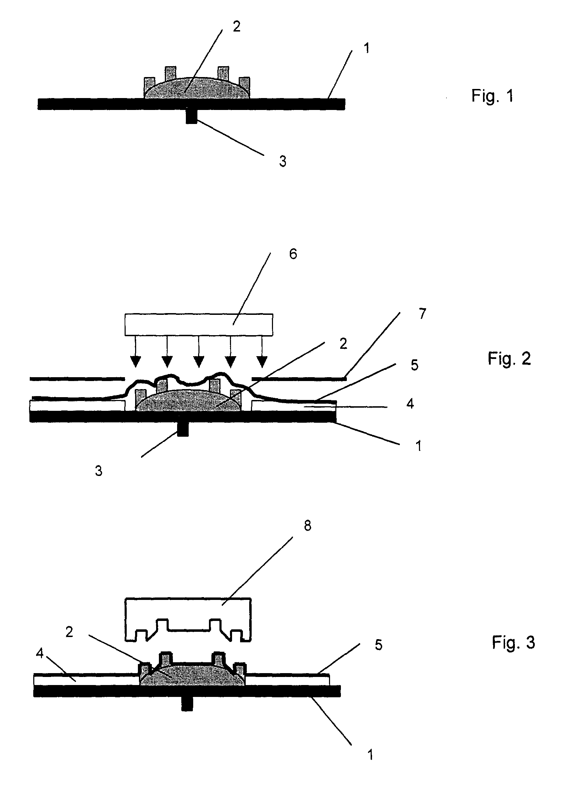

Die Figuren 1 bis 3 zeigen eine Abfolge des Herstellungsverfahrens. Auf einem Trägerteil, beispielsweise zur Verkleidung einer Kraftfahrzeugtür, soll ein erhabenes Symbol oder ein Schriftzug aufgebracht werden. Hierfür wird auf einem Trägerteil 1 ein der späteren Oberflächenprofilierung entsprechendes Profil 2 aufgebracht, welches entweder zusammen mit dem Trägerteil 1 hergestellt oder als gesondertes Teil nachträglich aufgebracht wird. Mit 3 ist ein sogenannter *"Masterpunkt"* bezeichnet, der eine genaue Zuordnung von Trägerteil mit Profil und einem später noch zu bezeichnenden Oberwerkzeug dient.

Nach einem weiteren Verfahrensstand, der in Figur 2 veranschaulicht ist, ist auf dem Trägerteil mittels eines bekannten Kaschierverfahrens eine mit einer Schaumschicht 4 versehene Folie 5 als Dekormaterial aufgebracht. Im Bereich des Profiles 2 wird das Dekormaterial 5 mittels einer Heizung 6 erwärmt, wobei zur Vermeidung einer Erwärmung außerhalb des zu profilierenden Bereiches eine Blende 7 vorgesehen ist.

Nachdem das Dekormaterial 5 in dem zu profilierenden Bereich mittels der Heizung 6 erwärmt wurde, wird es mittels eines Oberwerkzeuges 8, welches unter Berücksichtigung der Dicke des Dekormaterials 5 dem Profil 2 entspricht profiliert bzw. geprägt. Figur 3 zeigt einen bereits erzielten Endzustand mit abgehobenem Oberwerkzeug. In diesem Stadium ist die Folie 5 auf das Profil 2 aufgebracht worden und diesem Profil 2, welches als *"verlorener Kern"* unter dem Dekormaterial 5 verbleibt, exakt angepasst, so dass die gewünschte Oberflächenprofilierung mit dem gewünschten Aussehen bleibend hergestellt ist.

## Patentansprüche

1. Verfahren zur partiellen Oberflächenprofilierung von mit einem Dekormaterial zu kaschierenden Trägerteilen, **dadurch gekennzeichnet, dass** zuerst das Trägerteil mit einem der späteren Oberflächenprofilierung entsprechenden Profil bleibend versehen wird, dass das Dekormaterial auf das Trägerteil aufgebracht wird und dass dann das Dekormaterial mittels eines dem Profil angepassten Oberwerkzeug geprägt bzw. profiliert wird.

2. Verfahren nach Anspruch 1, **dadurch gekennzeichnet, dass** das der Oberflächenprofilierung entsprechende Profil bei der Herstellung des Trägerteiles ausgebildet wird.

3. Verfahren nach Anspruch 1, **dadurch gekennzeichnet, dass** das der Oberflächenprofilierung entsprechende Profil als ein vom Trägerteil getrenntes Teil hergestellt und mit dem Trägerteil verbunden wird.

4. Verfahren nach Anspruch 1, **dadurch gekennzeichnet, dass** das Dekormaterial unmittelbar vor dem Prägevorgang erwärmt wird.

5. Verfahren nach Anspruch 4, **dadurch gekennzeichnet, dass** die Erwärmung des zu profilierenden Bereiches durch IR-Strahler erfolgt.

6. Verfahren nach Anspruch 4, **dadurch gekennzeichnet, dass** die Erwärmung des zu profilierenden Bereiches durch ein erhitztes, gasförmiges Medium erfolgt.

7. Verfahren nach Anspruch 4, **dadurch gekennzeichnet, dass** die Erwärmung des zu profilierenden Bereiches durch Kontaktwärme erfolgt.

8. Verfahren nach Anspruch 4, **dadurch gekennzeichnet, dass** die Erwärmung des zu profilierenden Bereiches im Hochfrequenzfeld erfolgt.

9. Verfahren nach einem der Ansprüche 4 bis 8, **dadurch gekennzeichnet, dass** bei der Erwärmung des zu profilierenden Bereiches in dem Randbereich desselben eine Übergangszone mit allmählich abfallender Temperatur eingestellt wird.

10. Verfahren nach Anspruch 9, **dadurch gekennzeichnet, dass** zur Steuerung der örtlichen Verteilung der Wärmeeinwirkung auf das zu profilierende Material eine Blende verwendet wird.

11. Verfahren nach einem der Ansprüche 1 bis 10, **dadurch gekennzeichnet, dass** die Profilierung mittels eines kühlbaren Oberwerkzeuges erfolgt.

12. Verfahren nach einem der Ansprüche 1 bis 11, **dadurch gekennzeichnet, dass** die Profilierung mittels eines massiven Werkzeuges erfolgt.

13. Verfahren nach einem der Ansprüche 1 bis 11, **dadurch gekennzeichnet, dass** die Profilierung mittels eines luftdurchlässigen Oberwerkzeuges erfolgt.

14. Verfahren nach Anspruch 13, **dadurch gekennzeichnet, dass** durch Anwendung eines Unterdruckes am Oberwerkzeug das zu profilierende Material an das Oberwerkzeug angesaugt wird.

15. Verfahren nach Anspruch 13, **dadurch gekennzeichnet, dass** durch Anwendung eines Überdruckes das zu profilierende Material gegen das auf dem Trägerteil verbleibende Profil gedrückt wird.

16. Verfahren nach einem der Ansprüche 1 bis 15, **dadurch gekennzeichnet, dass** zwischen der zu profilierenden Oberfläche und dem Oberwerkzeug ein Trennmittel eingesetzt wird.

17. Verfahren nach einem der Ansprüche 1 bis 16, **dadurch gekennzeichnet, dass** von den den Profilierungsvorgang beeinflussenden Parametern mindestens einer veränderbar ist.

18. Verfahren nach Anspruch 17, **dadurch gekennzeichnet, dass** die den Profilierungsvorgang beeinflussenden Parameter der Anpressdruck, die Heiztemperatur, die Heizzeit sowie die Profilierungzeit bzw. Profilierungsgeschwindigkeit sind.

19. Verfahren nach einem der Ansprüche 1 bis 18, **dadurch gekennzeichnet, dass** zumindest der mit dem Profil versehene Bereich des Trägerteiles vor dem Aufbringen des Dekormaterials mit einem Klebstoff versehen wird.

20. Verfahren nach einem der Ansprüche 1 bis 18, **dadurch gekennzeichnet, dass** der zu profilierende Bereich mit dem verbleibenden Profil durch Verschweißen im Hochfrequenzfeld verbunden wird.

21. Verfahren nach einem der Ansprüche 1 bis 18, **dadurch gekennzeichnet, dass** der zu profilierende Bereich mit dem verbleibenden Profil durch mechanisches Verankern im Schmelzbad verbunden wird.

22. Verfahren nach einem der Ansprüche 1 bis 18, **dadurch gekennzeichnet, dass** der zu profilierende Bereich mit dem verbleibenden Profil durch eine zwischenliegende, niedrigschmelzende Siegelschicht verbunden wird.

23. Vorrichtung zur Durchführung des Verfahrens nach Anspruch 1, **dadurch gekennzeichnet, dass** das Oberwerkzeug (8) sowohl zum Erwärmen als auch zum Kühlen des zu profilierenden Materials (5) eingerichtet ist.

24. Vorrichtung nach Anspruch 23, **dadurch gekennzeichnet, dass** das Oberwerkzeug (8) als loses Teil mit guten Wärmeleiteigenschaften und einer für den Prägevorgang ausreichenden Wärmespeicherkapazität ausgebildet ist und durch unmittelbaren Kontakt mit einer Heizeinrichtung oder Kühleinrichtung erwärmbar oder kühlbar ist.

25. Vorrichtung nach Anspruch 23, **dadurch gekennzeichnet, dass** das Oberwerkzeug (8) sowohl mit einer Heizeinrichtung als auch mit einer Kühleinrichtung ausgerüstet ist.

26. Vorrichtung nach einem der Ansprüche 23 bis 25, **dadurch gekennzeichnet, dass** die Heizeinrichtung Infrarotstrahler umfasst.

27. Vorrichtung nach einem der Ansprüche 23 bis 25, **dadurch gekennzeichnet, dass** die Heizeinrichtung ein Heißluftgebläse umfasst.

28. Vorrichtung nach einem der Ansprüche 23 bis 25, **dadurch gekennzeichnet, dass** die Heizeinrichtung als Kontaktheizeinrichtung ausgebildet ist.

29. Vorrichtung nach einem der Ansprüche 23 bis 25, **dadurch gekennzeichnet, dass** die Heizeinrichtung als Hochfrequenzheizeinrichtung ausgebildet ist.

30. Vorrichtung nach einem der Ansprüche 23 bis 27, **dadurch gekennzeichnet, dass** sie eine Blende (6) umfasst, die die Wärmeeinwirkung auf den zu profilierenden Bereich (2) begrenzt.

31. Vorrichtung nach einem der Ansprüche 23 bis 30, **dadurch gekennzeichnet, dass** das Oberwerkzeug (8) aus einem massiven Werkstoff besteht.

32. Vorrichtung nach einem der Ansprüche 23 bis 24, **dadurch gekennzeichnet, dass** das Oberwerkzeug (8) aus einem mikropörösen Werkstoff besteht.

33. Vorrichtung nach Anspruch 32, **dadurch gekennzeichnet, dass** das Oberwerkzeug (8) mit einer Unterdruckquelle in Verbindung steht, die einen Unterdruck an der Berührungsfläche zwischen dem Oberwerkzeug (8) und dem zu profilierenden Material erzeugt.

34. Vorrichtung nach Anspruch 32, **dadurch gekennzeichnet, dass** das Oberwerkzeug (8) mit einer Druckquelle in Verbindung steht, die einen Überdruck an der Berührungsfläche zwischen dem Oberwerkzeug (8) und dem zu profilierenden Material erzeugt.
